# FASCICULE DE BREVET EUROPEEN

(11) **EP 3 364 068 B1**
(45) Date de publication et mention de la délivrance du brevet: **01.01.2020**
(21) Numéro de dépôt: 18152168.3
(22) Date de dépôt: 17.01.2018
(51) Int. Cl.: F16F 15/14

(54) **DISPOSITIF D'AMORTISSEMENT DE TORSION**
TORSIONSDÄMPFUNGSVORRICHTUNG
TORSION DAMPING DEVICE

(30) Priorité: 20.02.2017 FR 1751337
(43) Date de publication de la demande: 22.08.2018
(73) Titulaire: Valeo Embrayages, 80009 Amiens cedex 2 (FR)
(72) Inventeur: VERHOOG, Roel, 80009 AMIENS (FR); GRIECO, Giovanni, 80009 AMIENS (FR); CAILLERET, Franck, 80009 AMIENS (FR)
(74) Mandataire: Vincent, Catherine Marie Marguerite

(56) Documents cités:
- EP-A1- 3 093 522
- EP-A1- 3 101 311
- FR-A1- 2 982 335
- FR-A1- 3 010 163
- FR-A1- 3 013 415

## Description

### Domaine technique

L'invention se rapporte à un dispositif d'amortissement de torsion, notamment pour un embrayage d'un véhicule automobile.

### Etat de la technique

Un dispositif d'amortissement de torsion, est classiquement utilisé pour filtrer les vibrations dues aux acyclismes du moteur. Il peut être en particulier intégré à un embrayage, à un convertisseur de couple hydrodynamique ou à un double embrayage à sec ou humide.

Classiquement, il comporte un support, parfois appelé « rondelle de phasage », destiné à être entraîné en rotation, et plusieurs masses oscillantes pendulaires, montées oscillantes sur le support autour d'un axe parallèle à l'axe de rotation du support, le déplacement d'une masse oscillante par rapport au support étant généralement guidé par deux organes de roulement coopérant avec des pistes de roulement du support et des pistes de roulement de la masse oscillante.

FR 3 013 415 décrit un dispositif d'amortissement de torsion dans lequel le déplacement de chaque masse oscillante est guidé par un unique organe de roulement et par une articulation avec chacune des deux masses oscillantes circonférentiellement adjacentes. Ce dispositif d'amortissement de torsion combine avantageusement une grande simplicité de construction, proche de celle d'un dispositif à pendules monofilaires, et des performances d'amortissement proches de celles d'un dispositif à pendules bifilaires. FR 2 982 335 divulgue un dispositif d'amortissement de torsion dans lequel les organes de roulement sont constitués par une bille afin de réduire le frottement axial entre le support et les masses pendulaires.

Quel que soit le dispositif d'amortissement de torsion considéré, l'espace qu'il occupe doit être le plus faible possible. En particulier, l'encombrement suivant l'axe de rotation du support doit être faible.

Il existe un besoin permanent pour un dispositif d'amortissement de torsion, et en particulier pour un dispositif d'amortissement de torsion décrit dans FR 3 013 415, présentant un encombrement réduit.

Un but de l'invention est de répondre à ce besoin.

### Résumé de l'invention

A cet effet, l'invention propose un dispositif d'amortissement de torsion, notamment destiné à être intégré dans une chaîne de transmission d'un véhicule automobile, notamment dans un embrayage, le dispositif comportant :
- un support présentant des première et deuxième grandes faces ;
- une pluralité de masses oscillantes disposées autour d'un axe de rotation X du support, au moins une, de préférence chaque masse oscillante, dite « masse oscillante guidée », comportant des première et deuxième joues s'étendant, au moins en partie, voire sensiblement complètement, face aux première et deuxième grandes faces du support, respectivement, et étant guidée en oscillation sur le support par au moins un couple de premier et deuxième organes de roulement.

De manière remarquable, ledit premier organe de roulement s'étend entièrement entre un premier berceau de support définissant une première piste de roulement de support, un premier berceau de masse oscillante définissant une première piste de roulement de masse oscillante, la première grande face du support et la première joue de ladite masse oscillante guidée.

Une telle disposition du premier organe de roulement évite de devoir ménager, selon la technique antérieure, une fenêtre à travers le support pour définir une piste de roulement pour l'organe de roulement. Or une telle fenêtre affaiblit la résistance mécanique du support. L'invention permet donc, à résistance mécanique identique du support, de réduire son épaisseur, et donc l'encombrement axial du dispositif d'amortissement de torsion. L'épaisseur du support peut être en particulier inférieure à 5 mm, de préférence inférieure à 4 mm, de préférence inférieure à 3 mm.

Par ailleurs, la réduction de l'épaisseur du support permet de réduire son inertie par rapport à celle de la masse oscillante, ce qui améliore l'efficacité du dispositif d'amortissement de torsion.

L'invention peut être en particulier appliquée à un dispositif d'amortissement de torsion du type décrit dans FR 3 013 415. La masse oscillante guidée est alors également guidée en oscillation sur le support par des première et deuxième articulations avec des première et deuxième masses oscillantes circonférentiellement adjacentes à ladite masse oscillante guidée, respectivement.

Un dispositif selon l'invention peut encore comporter une ou plusieurs des caractéristiques optionnelles suivantes :
- la masse oscillante guidée comporte, de préférence est constituée, par lesdites première et deuxième joues et une masse périphérique de préférence radialement extérieure au support reliant rigidement lesdites première et deuxième joues ;
- le premier berceau de support et/ou le premier berceau de masse oscillante sont fixés rigidement sur le support et/ou sur la première joue de la masse oscillante, respectivement ;
- le premier berceau de support et/ou le premier berceau de masse oscillante sont soudés sur le support et/ou sur la première joue de la masse oscillante guidée, respectivement ;
- le premier berceau de support et/ou le premier berceau de masse oscillante définissent des pistes de roulement pour plusieurs premiers organes de roulement ;
- la masse oscillante guidée est guidée en oscillation sur le support par un unique couple de premier et deuxième organes de roulement, et est articulée sur au moins une, de préférence chaque masse oscillante adjacente ;
- le dispositif comporte une pièce d'articulation interposée entre au moins une, de préférence chaque masse oscillante guidée et une masse oscillante adjacente ;
- au moins une, de préférence chacune des première et deuxième joues présente un organe de rigidification, de préférence sous la forme d'une rainure ou d'une nervure s'étendant de préférence sensiblement radialement ;
- les première et deuxième joues s'étendant parallèlement entre elles ;
- ledit premier organe de roulement est décalé axialement par rapport au support.

De préférence, ledit deuxième organe de roulement s'étend entièrement entre un deuxième berceau de support définissant une deuxième piste de roulement de support, un deuxième berceau de masse oscillante définissant une deuxième piste de roulement de masse oscillante, la deuxième grande face du support et la deuxième joue de la masse oscillante. De préférence, les caractéristiques optionnelles relatives au premier organe de roulement, aux premiers berceaux, et à la première joue sont applicables, optionnellement, au deuxième organe de roulement, aux deuxièmes berceaux, et à la deuxième joue, respectivement.

Le dispositif d'amortissement de torsion selon l'invention est de préférence choisi parmi un double volant amortisseur, un convertisseur de couple hydrodynamique et un disque de friction.

L'invention concerne également un véhicule automobile équipé d'un dispositif d'amortissement de torsion selon l'invention.

### Brève description des figures

D'autres caractéristiques et avantages de l'invention apparaîtront encore à la lecture de la description détaillée et à l'examen du dessin annexé dans lequel
- la figure 1 représente, schématiquement, deux vues de face d'un premier mode de réalisation d'un dispositif d'amortissement de torsion selon l'invention, la joue 14₂ étant représentée transparente, les masses oscillantes étant centrées (vue de gauche la) et décalées (vue de droite 1b) par rapport aux berceaux de support, respectivement, ainsi que des sections locales de ce dispositif;
- la figure 2 représente une vue en perspective (2a) et une vue éclatée (2b) du dispositif d'amortissement de torsion de la figure 1 ;
- la figure 3 représente une vue en perspective d'un détail d'un dispositif d'amortissement de torsion suivant un deuxième mode de réalisation, la joue 14₂ étant représentée transparente ;
- la figure 4 représente une section radiale du dispositif d'amortissement de torsion de la figure 3, la section passant par l'axe des rouleaux.

Sur les différentes figures, des références identiques sont utilisées pour désigner des organes identiques ou analogues.

### Définitions

Sauf indication contraire,
- "axialement" signifie "parallèlement à l'axe X de rotation du support",
- "radialement" signifie "selon un axe transversal coupant l'axe de rotation du support" ;
- "transversal" signifie "dans un plan perpendiculaire à l'axe de rotation du support",
- "angulairement" ou "circonférentiellement" signifient "autour de l'axe de rotation du support",
- "orthoradialement" signifie "perpendiculairement à une direction radiale et dans un plan transversal".

Par "plan radial", on entend un plan contenant un axe radial et l'axe X.

Par "plan axial", on entend un plan contenant l'axe X.

Par "décalage radial", on fait référence aux positions de deux organes qui ne sont pas à même distance de l'axe X.

On appelle "diamètre équivalent" d'une section le diamètre d'un disque présentant la même surface que ladite section. Lorsque la section est discoïdale, le diamètre équivalent est donc égal au diamètre de la section.

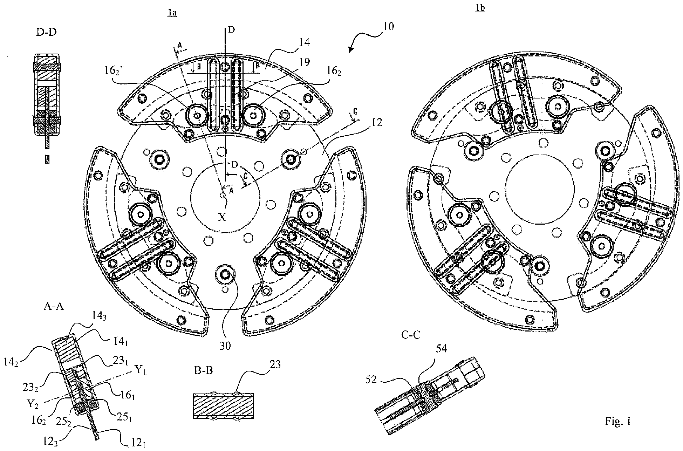

La "position de repos" d'une masse oscillante est la position adoptée par la masse oscillante lorsqu'elle est soumise à une force de centrifugation résultant de la rotation du support, sans être soumise à des oscillations de torsion provenant d'acyclismes du moteur thermique. Sauf sur la partie droite de la figure 1, les masses oscillantes représentées sont dans leurs positions de repos.

"L'épaisseur" d'une pièce fait référence à une dimension mesurée selon l'axe X.

Par "véhicule automobile", on entend non seulement les véhicules passagers, mais également les véhicules industriels, ce qui comprend notamment les poids lourds, les véhicules de transport en commun ou les véhicules agricoles.

Par « articulation » entre deux masses oscillantes adjacentes, on entend une liaison autorisant une rotation de l'une de ces masses oscillantes par rapport à l'autre, autour d'un axe parallèle à l'axe X du support. Une « articulation » n'est pas incompatible avec un glissement entre lesdites masses oscillantes. Une articulation peut être obtenue par coopération de parties mâle et femelle desdites masses oscillantes adjacentes ou par l'intermédiaire d'une pièce d'articulation, interposée entre lesdites masses adjacentes.

Par « masse oscillante », on entend une masse qui est montée de manière à osciller sur le support en réponse aux acyclismes du moteur du véhicule. Une masse oscillante est classiquement constituée par une paire de joues, s'étendant de manière à prendre en sandwich le support et rigidement solidaires entre elles. Une masse oscillante peut être également constituée par une joue unique.

L'adjectif « guidée » est utilisé, uniquement à des fins de clarté, pour distinguer une masse oscillante des masses oscillantes « adjacentes » qui s'étendent à côté d'elle.

Deux pièces sont dites « rigidement solidaires » lorsqu'elles sont en permanence immobilisées l'une par rapport à l'autre. Cette immobilisation peut résulter d'une fixation de la première pièce sur la deuxième pièce directement ou par l'intermédiaire d'une ou plusieurs pièces intermédiaires.

Sauf indication contraire, les verbes "comporter", "présenter" ou "comprendre" doivent être interprétés de manière large, c'est-à-dire non limitative.

### Description détaillée

Comme représenté sur les figures, un dispositif d'amortissement de torsion 10 selon l'invention comporte un support 12 apte à se déplacer en rotation autour d'un axe X et une pluralité de masses oscillantes 14 mobiles par rapport au support 10.

Dans les modes de réalisation représentés, les pendules, constitués chacun par une masse oscillante 14 et un ou plusieurs couples de premier et deuxièmes organes de roulement, sont tous identiques et assemblés de manière identique au support 12. Dans la suite de la description, un seul de ces pendules est donc décrit.

Le support 12 présente une forme générale plane, annulaire ou multilobée. Il présente des première et deuxième grande faces, 12₁ et 12₂, respectivement, sensiblement parallèles, s'étendant sensiblement perpendiculairement à l'axe X.

Les masses oscillantes sont de préférence réparties équi-angulairement autour de l'axe X. De préférence, leur nombre est supérieur à 2 et/ou inférieur à 8. Le dispositif peut en particulier comporter trois, cinq ou sept masses oscillantes. Dans les exemples représentés sur les figures 1 à 3, le dispositif comporte trois masses oscillantes uniformément réparties autour de l'axe X.

Chaque masse oscillante 14 comporte classiquement des première et deuxième joues 14₁ et 14₂, de forme généralement plane, s'étendant respectivement en regard et sensiblement parallèlement aux première et deuxième grandes faces du support 12.

Les joues, de préférence en métal, de préférence en acier, présentent de préférence une épaisseur inférieure à 5 mm, de préférence inférieure à 4 mm, de préférence inférieure à 3 mm, de préférence inférieure à 2 mm.

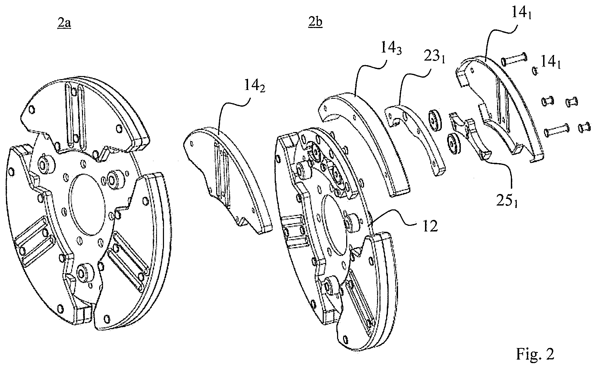

Dans un premier mode de réalisation principal, illustré sur les figures 1 et 2, préféré entre tous, les première et deuxième joues 14₁ et 14₂ sont rigidement fixées l'une à l'autre par l'intermédiaire d'une masse périphérique 14₃ qui s'étend, de préférence sensiblement circonférentiellement, à la périphérie du support, de préférence entièrement à l'extérieur du contour périphérique du support.

De préférence, la masse de la masse périphérique 14₃ représente plus de 50%, plus de 70%, ou plus de 90% de la masse de la masse oscillante.

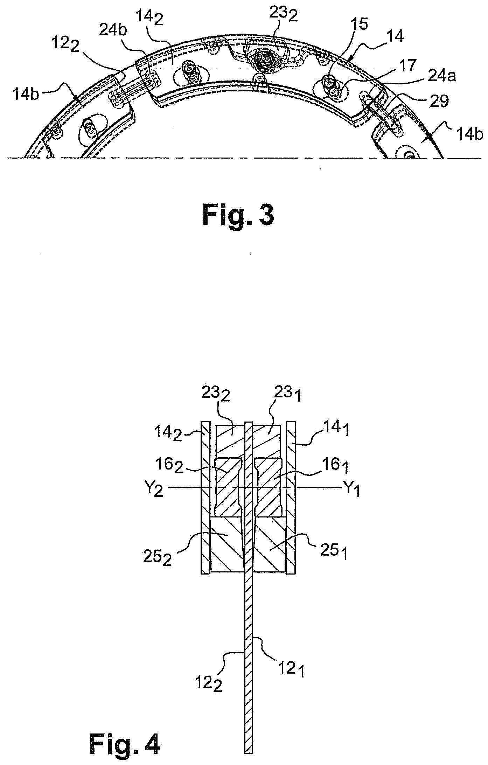

Dans un deuxième mode de réalisation principal, illustré sur la figure 3, les première et deuxième joues 14₁ et 14₂ sont rigidement fixées l'une à l'autre au moyen d'entretoises rigides, de préférence au moyen de rivets d'entretoise 15, qui traversent des fenêtres d'entretoise 17 respectives ménagées suivant l'épaisseur du support 12 (figure 3). De préférence, les première et deuxième joues 14₁ et 14₂ sont alors des masselottes qui contribuent significativement à l'amortissement.

De préférence, les deux masselottes représentent ensemble plus de 50%, plus de 70%, ou plus de 90% de la masse de la masse oscillante.

Le premier mode de réalisation principal est particulièrement avantageux puisqu'il améliore l'efficacité de l'amortissement par la masse oscillante. En outre, les rivets d'entretoise sont optionnels. De préférence, la masse oscillante ne comporte pas de rivets d'entretoise et présente, en coupe radiale, la forme générale d'un « U », dont les ailes sont constituées par les joues et la base est constituée par la masse périphérique 14₃. Enfin, le support n'a pas besoin d'être percé pour ménager des fenêtres d'entretoise 17, ce qui augmente sa résistance mécanique et permet d'en réduire encore l'épaisseur.

En particulier lorsque la masse oscillante présente la forme générale d'un « U » et vient chevaucher le support, les joues présentent de préférence des organes de rigidification 19 , de préférence sous la forme de rainures ou de nervures, de préférence s'étendant sensiblement radialement.

Quel que soit le mode de réalisation, chaque masse oscillante est montée oscillante sur le support, au moyen d'un ou plusieurs couples de premier et deuxième organes de roulement 16₁ et 16₂, respectivement, de préférence des rouleaux, d'axes Y₁ et Y₂, respectivement, parallèles à l'axe X et de préférence sensiblement confondus.

A la différence des dispositifs d'amortissement de torsion conventionnels, les premier et deuxième organes de roulement ne traversent pas le support, mais s'étendent chacun d'un côté du support, en face des première et deuxième grandes faces du support, respectivement (section A-A de la figure 1). Ils sont donc décalés axialement, le décalage étant de préférence sensiblement égal à l'épaisseur du support.

Avantageusement, le support ne comporte pas de fenêtre de roulement, une telle fenêtre étant classiquement ménagée dans l'épaisseur du support pour définir une piste de roulement pour un ou plusieurs organes de roulement.

De préférence, tous les organes de roulement sont identiques.

De préférence, tous les organes de roulement présentent une épaisseur inférieure à 5 mm, de préférence inférieure à 4 mm, de préférence inférieure à 3 mm, de préférence inférieure à 2 mm.

De préférence, la grande face de support et la joue entre lesquelles s'étend un organe de roulement sont conformées pour guider axialement ledit organe de roulement. Autrement dit, lorsque ledit organe de roulement reçoit une poussée parallèlement à l'axe X, il entre en butée avec ladite grande face de support ou ladite joue, selon le sens de ladite poussée.

Les premier et deuxième organes de roulement coopèrent
- d'une part avec des première et deuxième pistes de roulement radialement extérieures définies par des premier et deuxième berceaux de support 23₁ et 23₂, rigidement fixés sur le support ou venus de matière avec le support, respectivement, et,
- d'autre part, avec des première et deuxième pistes de roulement radialement intérieures définies par des premier et deuxième berceaux de masse oscillante 25₁ et 25₂, rigidement fixés sur les première et deuxième joues, respectivement, ou définis par les première et deuxième joues, respectivement.

De préférence, les premier et deuxième berceaux de support 23₁ et 23₂ sont rigidement fixés sur le support au moyen de rivets, de colle ou de soudures. De préférence, les premier et deuxième berceaux de support 23₁ et 23₂ sont soudés, de préférence par soudure laser, sur le support.

De préférence, les premier et deuxième berceaux de masse oscillante 25₁ et 25₂ sont rigidement fixés sur les première et deuxième joues, respectivement, au moyen de rivets, de colle ou de soudures. De préférence, les premier et deuxième berceaux de masse oscillante 25₁ et 25₂ sont soudés, de préférence par soudure laser, sur les première et deuxième joues, respectivement.

Avantageusement, comme illustré sur la figure 3 pour le deuxième berceau de support 23₂, la mise en œuvre de soudures réduit considérablement les dimensions des berceaux puisqu'il n'est pas nécessaire que les berceaux soient traversés par des rivets.

Le nombre de couples de premier et deuxième organes de roulement 16₁ et 16₂ pour une même masse oscillante n'est pas limité.

Dans un mode de réalisation, comme illustré sur la figure 1, chaque masse oscillante est guidée par deux couples de premier et deuxième organes de roulement (les deux premiers rouleaux 16₂ et 16₂' sont représentés). De préférence, les premiers et deuxièmes berceaux de support et/ou de masse oscillante sont communs à l'ensemble des premiers et deuxièmes organes de roulement, respectivement, d'une masse oscillante.

Dans un mode de réalisation, comme illustré sur la figure 3, chaque masse oscillante est guidée,
d'une part, par un seul couple de premier et deuxième organes de roulement, et,
d'autre part, par des première et deuxième articulations, 24a et 24b respectivement, à ses première et deuxième parties terminales circonférentielles, respectivement, avec des première et deuxième masses oscillantes 14a et 14b, respectivement, circonférentiellement adjacentes à la masse oscillante 14.

Les caractéristiques des articulations décrites dans FR 3 013 415 A1 et FR 3 036 150 A1 peuvent être appliquées aux première et deuxième articulations.

L'invention est particulièrement utile dans un tel mode de réalisation « à articulations latérales », dans lequel, classiquement, la pression de Hertz est exercée sur un unique organe de roulement. La présence des premier et deuxième organes de roulement permet en effet de limiter la pression de Hertz exercée sur chacun de ces organes.

Les première et deuxième articulations, 24a et 24b respectivement, sont de préférence conformées de manière à n'autoriser une rotation de la masse oscillante 14 que dans un plan transversal.

Chaque articulation 24 (24a, 24b) comporte une partie mâle et une partie femelle.

La partie mâle et/ou la partie femelle d'une articulation 24 peuvent être venues de matière avec une joue ou avec une masse périphérique d'une masse oscillante. Elles peuvent être également constituées par une pièce, par exemple une fourchette d'articulation ou un doigt d'articulation rapporté, fixé sur la masse oscillante.

De préférence, comme dans le mode de réalisation de la figure 3, l'articulation entre la masse oscillante 14 et une masse oscillante circonférentiellement adjacente est réalisée au moyen d'une pièce d'articulation 29 interposée entre lesdites masses oscillantes.

Le dispositif d'amortissement de torsion comporte encore, de préférence, une butée masse-support 30, limitant l'amplitude d'oscillation de la masse oscillante sur le support. La butée masse-support est de préférence rigidement solidaire du support, comme représenté sur la figure 1. La butée masse-support peut être également constituée par un rivet d'entretoise 15, entrant en butée avec la fenêtre d'entretoise qu'il traverse, comme représenté sur la figure 3.

Sur la figure 1, la butée masse-support comporte une âme 54, rigide, par exemple en acier, de préférence sous la forme d'un pion, et un bloc en élastomère 52, de préférence sous la forme d'un tube en un matériau polymère enfilé sur l'âme 54, de manière à assurer un contact « mou ».

Comme cela apparaît clairement à présent, l'invention fournit une solution évitant de devoir ménager une fenêtre à travers le support pour définir une piste de roulement. Le support peut avantageusement présenter une faible épaisseur, et l'encombrement axial du dispositif d'amortissement de torsion en est avantageusement réduit.

Par ailleurs, l'invention permet d'utiliser une masse oscillante comportant une masse périphérique radialement extérieure au support, ce qui augmente l'efficacité de l'amortissement.

Enfin, la mise en œuvre de berceaux soudés pour définir des pistes de roulement permet d'un réduire significativement les dimensions, et donc de réduire la masse du dispositif d'amortissement de torsion. La réduction de la masse des berceaux fixés sur le support permet aussi d'améliorer l'efficacité du dispositif d'amortissement de torsion.

Bien entendu, les combinaisons des différents modes de réalisation décrits ci-dessus sont possibles.

## Revendications

1. Dispositif d'amortissement de torsion, notamment destiné à être intégré dans une chaîne de transmission d'un véhicule automobile, notamment dans un embrayage, le dispositif comportant :
- un support (12) présentant des première et deuxième grandes faces (12₁,12₂) ;
- une pluralité de masses oscillantes (14) disposées autour d'un axe de rotation X du support,
au moins une, de préférence chaque masse oscillante, dite « masse oscillante guidée » comportant des première et deuxième joues (14₁,14₂) s'étendant, au moins en partie, face aux première et deuxième grandes faces du support, respectivement, et étant guidée en oscillation sur le support par au moins un couple de premier et deuxième organes de roulement (16₁,16₂),
le dispositif étant **caractérisé en ce que** ledit premier organe de roulement s'étend entièrement entre un premier berceau de support (23₁) définissant une première piste de roulement de support, un premier berceau de masse oscillante (25₁) définissant une première piste de roulement de masse oscillante, ladite première grande face du support et ladite première joue de la masse oscillante,
et **en ce que** ledit premier organe de roulement est un rouleau.

2. Dispositif selon la revendication précédente, dans lequel le support présente une épaisseur inférieure à 4 mm.

3. Dispositif selon la revendication précédente, dans lequel le support présente une épaisseur inférieure à 3 mm.

4. Dispositif selon l'une quelconque des revendications précédentes, dans lequel ladite masse oscillante guidée est articulée avec une masse oscillante adjacente au moyen d'une pièce d'articulation interposée entre ladite masse oscillante guidée et ladite masse oscillante adjacente.

5. Dispositif selon l'une quelconque des revendications précédentes, dans lequel la masse oscillante guidée comporte, de préférence est constituée, par lesdites première et deuxième joues et une masse périphérique (14₃) radialement extérieure au support reliant rigidement lesdites première et deuxième joues.

6. Dispositif selon l'une quelconque des revendications précédentes, dans lequel le premier berceau de support et/ou le premier berceau de masse oscillante sont fixés rigidement sur le support et/ou sur la première joue de la masse oscillante, respectivement.

7. Dispositif selon l'une quelconque des revendications précédentes, dans lequel le premier berceau de support et/ou le premier berceau de masse oscillante sont soudés sur le support et/ou sur la première joue de la masse oscillante, respectivement.

8. Dispositif selon l'une quelconque des revendications précédentes, dans lequel le premier berceau de support et/ou le premier berceau de masse oscillante définissent des pistes de roulement pour plusieurs premiers organes de roulement.

9. Dispositif selon l'une quelconque des revendications précédentes, dans lequel ladite masse oscillante guidée est guidée en oscillation sur le support par un unique couple de premier et deuxième organes de roulement, et est articulée sur au moins une, de préférence chaque masse oscillante adjacente.

10. Dispositif selon l'une quelconque des revendications précédentes, dans lequel au moins une, de préférence chacune des première et deuxième joues (14₁,14₂) présente un organe de rigidification (19), de préférence sous la forme d'une rainure ou d'une nervure s'étendant sensiblement radialement.

11. Dispositif selon l'une quelconque des revendications précédentes, dans lequel les première et deuxième joues (14₁,14₂) s'étendant parallèlement entre elles.

12. Dispositif selon l'une quelconque des revendications précédentes, dans lequel ledit premier organe de roulement est décalé axialement par rapport au support (12).

13. Dispositif d'amortissement de torsion selon l'une quelconque des revendications précédentes, choisi parmi un double volant amortisseur, un convertisseur de couple hydrodynamique et un disque de friction.

14. Véhicule automobile équipé d'un dispositif d'amortissement de torsion selon l'une quelconque des revendications précédentes.

## Patentansprüche

1. Torsionsdämpfungsvorrichtung, die insbesondere dazu bestimmt ist, in einen Antriebsstrang eines Kraftfahrzeugs integriert zu werden, insbesondere in eine Kupplung, wobei die Vorrichtung aufweist:
- einen Träger (12), der erste und zweite große Seiten (12₁, 12₂) aufweist;
- eine Vielzahl von Schwungmassen (14), die um eine Drehachse X des Trägers herum angeordnet sind,
wobei mindestens eine, vorzugsweise jede Schwungmasse, "geführte Schwungmasse" genannt, erste und zweite Wangen (14₁, 14₂) aufweist, die sich zumindest zum Teil gegenüber den ersten bzw. zweiten großen Seiten des Trägers befinden, und in Schwingung auf dem Träger von mindestens einem Paar erster und zweiter Rollelemente (16₁, 16₂) geführt wird,
wobei die Vorrichtung **dadurch gekennzeichnet ist, dass** das erste Rollelement sich ganz zwischen einer ersten Trägerhalterung (23₁), die eine erste Träger-Rollbahn definiert, einer ersten Schwungmassehalterung (25₁), die eine erste Schwungmasse-Rollbahn definiert, der ersten großen Seite des Trägers und der ersten Wange der Schwungmasse erstreckt,
und dass das erste Rollelement eine Rolle ist.

2. Vorrichtung nach dem vorhergehenden Anspruch, wobei der Träger eine Dicke von weniger als 4 mm aufweist.

3. Vorrichtung nach dem vorhergehenden Anspruch, wobei der Träger eine Dicke von weniger als 3 mm aufweist.

4. Vorrichtung nach einem der vorhergehenden Ansprüche, wobei die geführte Schwungmasse an eine benachbarte Schwungmasse mittels eines Gelenkbauteils angelenkt ist, das zwischen die geführte Schwungmasse und die benachbarte Schwungmasse eingefügt ist.

5. Vorrichtung nach einem der vorhergehenden Ansprüche, wobei die geführte Schwungmasse aufweist, vorzugsweise besteht aus, den ersten und zweiten Wangen und einer Umfangsmasse (14₃) radial außen bezüglich des Trägers, die die ersten und zweiten Wangen steif verbindet.

6. Vorrichtung nach einem der vorhergehenden Ansprüche, wobei die erste Trägerhalterung und/oder die erste Schwungmassehalterung steif am Träger und/oder an der ersten Wange der Schwungmasse befestigt sind.

7. Vorrichtung nach einem der vorhergehenden Ansprüche, wobei die erste Trägerhalterung und/oder die erste Schwungmassehalterung auf den Träger und/oder die erste Wange der Schwungmasse geschweißt sind.

8. Vorrichtung nach einem der vorhergehenden Ansprüche, wobei die erste Trägerhalterung und/oder die erste Schwungmassehalterung Rollbahnen für mehrere erste Rollelemente definieren.

9. Vorrichtung nach einem der vorhergehenden Ansprüche, wobei die geführte Schwungmasse in Schwingung auf dem Träger durch ein einziges Paar erster und zweiter Rollelemente geführt wird, und an mindestens eine, vorzugsweise jede, benachbarte Schwungmasse angelenkt ist.

10. Vorrichtung nach einem der vorhergehenden Ansprüche, wobei mindestens eine, vorzugsweise jede, der ersten und zweiten Wangen (14₁, 14₂) ein Versteifungselement (19) vorzugsweise in Form einer Rille oder Rippe aufweist, das sich im Wesentlichen radial erstreckt.

11. Vorrichtung nach einem der vorhergehenden Ansprüche, wobei die ersten und zweiten Wangen (14₁, 14₂) sich parallel zueinander erstrecken.

12. Vorrichtung nach einem der vorhergehenden Ansprüche, wobei das erste Rollelement axial bezüglich des Trägers (12) versetzt ist.

13. Torsionsdämpfungsvorrichtung nach einem der vorhergehenden Ansprüche, die ausgewählt wird unter einem Zweimassenschwungrad, einem hydrodynamischen Drehmomentwandler und einer Reibscheibe.

14. Kraftfahrzeug, das mit einer Torsionsdämpfungsvorrichtung nach einem der vorhergehenden Ansprüche ausgestattet ist.

## Claims

1. Torsion damping device, intended in particular to be incorporated in a transmission chain of a motor vehicle, particularly in a clutch, the device comprising:
- a support (12) having first and second large faces (12₁, 12₂);
- a plurality of oscillating masses (14) arranged around an axis of rotation X of the support,
at least one, preferably each oscillating mass, called "guided oscillating mass", comprising first and second flanges (14₁,14₂) extending, at least partly, facing the first and second large faces of the support, respectively, and being guided in oscillation on the support by at least one pair of first and second rolling members (16₁,16₂),
the device being **characterized in that** said first rolling member extends entirely between a first support cradle (23₁) defining a first support rolling track, a first oscillating mass cradle (25₁) defining a first oscillating mass rolling track, said first large face of the support and said first flange of the oscillating mass,
and **in that** the first rolling member is a roller.

2. Device according to the preceding claim, in which the support has a thickness less than 4 mm.

3. Device according to the preceding claim, in which the support has a thickness less than 3 mm.

4. Device according to any one of the preceding claims, in which said guided oscillating mass is articulated with an adjacent oscillating mass by means of an articulation piece interposed between said guided oscillating mass and said adjacent oscillating mass.

5. Device according to any one of the preceding claims, in which the guided oscillating mass comprises, preferably is composed of, said first and second flanges and a peripheral mass (14₃) radially external to the support rigidly linking said first and second flanges.

6. Device according to any one of the preceding claims, in which the first support cradle and/or the first oscillating mass cradle are fixed rigidly onto the support and/or onto the first flange of the oscillating mass, respectively.

7. Device according to any one of the preceding claims, in which the first support cradle and/or the first oscillating mass cradle are welded onto the support and/or on to the first flange of the oscillating mass, respectively.

8. Device according to any one of the preceding claims, in which the first support cradle and/or the first oscillating mass cradle define rolling tracks for several first rolling members.

9. Device according to any one of the preceding claims, in which said guided oscillating mass is guided in oscillation on the support by a single pair of first and second rolling members, and is articulated on at least one, preferably each, adjacent oscillating mass.

10. Device according to any one of the preceding claims, in which at least one, preferably each, of the first and second flanges (14₁,14₂) has a strengthening member (19), preferably in the form of a groove or of a ridge extending substantially radially.

11. Device according to any one of the preceding claims, in which the first and second flanges (141,142) extending parallel between them.

12. Device according to any one of the preceding claims, in which the first rolling member is axially offset relative to the support.

13. Torsion damping device according to any one of the preceding claims, chosen from a dual-mass flywheel, a hydrodynamic torque converter and a friction disc.

14. Motor vehicle equipped with a torsion damping device according to any one of the preceding claims.
